# EUROPÄISCHE PATENTSCHRIFT

(11) **EP 0 424 864 B1**
(45) Veröffentlichungstag und Bekanntmachung des Hinweises auf die Patenterteilung: **21.04.1993**
(21) Anmeldenummer: 90120275.4
(22) Anmeldetag: 23.10.1990
(51) Int. Cl.: F22D 1/40, F01K 7/40

(54) **Kraftwerksanlage**
Power plant
Centrale thermique

(30) Priorität: 27.10.1989 DE 3935852
(43) Veröffentlichungstag der Anmeldung: 02.05.1991
(73) Patentinhaber: Asea Brown Boveri Aktiengesellschaft, 68309 Mannheim (DE)
(72) Erfinder: van den Berg, Claus, W-6700 Ludwigshafen (DE); Schemenau, Wolfgang, W-6941 Laudenbach (DE); Weirich, Peter-Hanns, Dr., W-6800 Mannheim 1 (DE)
(74) Vertreter: Rupprecht, Klaus, Dipl.-Ing.

(56) Entgegenhaltungen:
- DE-A- 2 658 208
- DE-A- 3 627 834
- US-A- 3 488 960

## Beschreibung

Die Erfindung betrifft eine Kraftwerksanlage nach dem Oberbegriff des Anspruches 1.

In einem kohlegefeuerten Kraftwerk beispielsweise mit einer Rauchgasentschwefelungsanlage, bei dem das Rauchgas über einen Kamin abgeleitet wird, wird die Rauchgaswärme zwischen dem Luftvorwärmer und der Rauchgasentschwefelungsanlage zur Wiederaufheizung der Rauchgase nach der Rauchgasentschwefelungsanlage verwendet, da dem Kamin Rauchgas mit einer bestimmten Temperatur zugeführt werden muß. Diese zur Aufheizung des Rauchgases für den Kamin benutzte Wärme wird mit dem Rauchgas an die Umgebung abgegeben.

Aufgabe der Erfindung ist es, eine Kraftwerksanlage der eingangs genannten Art zu schaffen, bei der dieser Nachteil vermieden ist.

Diese Aufgabe wird erfindungsgemäß durch die kennzeichnenden Merkmale des Anspruches 1 gelöst.

Der übliche Weg der Rauchgase bei kohlegefeuerten Kraftwerksanlagen führt vom Dampferzeugeraustritt über eine Entstickungsanlage zu einem Regenerativ-Luftvorwärmer, in dem die heißen Rauchgase abgekühlt und die dabei freiwerdende Wärme zur Erhitzung der angesaugten Verbrennungsluft verwendet wird. Wenn die Rauchgase danach in der Rauchgasentschwefelungsanlage gereinigt werden sollen, liegt die Eintrittstemperatur in dieser Anlage bei ca. 75°C. Die Rauchgase verlassen die Rauchgasentschwefelungsanlage mit einer Temperatur von ca. 50°C. Wenn, wie bekannt, zur Ableitung der Rauchgase ein Kamin verwendet wird, so muß die Kaminaustrittstemperatur mindestens 72°C betragen, so daß die Rauchgase nach der Rauchgasentschwefelungsanlage wieder aufgeheizt werden müssen. Die dafür notwendige Wärmemenge wird dem Rauchgas üblicherweise zwischen dem Luftvorwärmer und der Rauchgasentschwefelungsanlage entzogen.

Wenn erfindungsgemäß ein Naturzug-Kühlturm zur Rauchgasableitung verwendet wird, ist eine Wiederaufheizung der Rauchgase nach der Rauchgasentschwefelungsanlage nicht erforderlich. Daher kann die zwischen dem Luftvorwärmer und der Rauchgasentschwefelungsanlage abzuführende Wärmemenge für andere Zwecke verwendet werden.

Erfindungsgemäß kann dieses Wärmepotential zur Speisewasservorwärmung oder zur Heizwärmeauskoppelung genutzt werden.

Zur Speisewasservorwärmung wird ein Teil des Speisewasssers durch einen zwischen dem Luftvorwärmer und der Rauchgasentschwefelungsanlage in die Rauchgasleitung eingesetzten Wärmetauscher geleitet, wodurch das Speisewasser erwärmt wird. Dieses Speisewasser wird dann wieder der Speisewasserzuführung zum Dampferzeuger an geeigneter Stelle zugeführt.

Eine dritte Möglichkeit besteht darin, in die Rauchgasleitung zwischen dem Luftvorwärmer und der Rauchgasentschwefelungsanlage einen Wärmetauscher einzusetzen, der die Wärme in eine Heizwasseranlage, beispielsweise ein Fernwärmenetz, überträgt.

Anhand der Zeichnung, in der einige Ausführungsbeispiele der Erfindung dargestellt sind, sollen die Erfindung sowie weitere vorteihafte Ausgestaltungen und Verbesserung der Erfindung näher erläutert und beschrieben werden.

Es zeigt:
- Figur 1: eine Schaltungsanordnung einer ersten Ausführungsform einer Kraftwerksanlage gemäß der Erfindung,
- Figur 2: eine weitere Ausführungsform der Erfindung in ähnlicher Darstellung wie die in Figur 1,
- Figur 3: eine dritte Ausführungsform der Erfindung in gleicher Darstellung wie in den Figuren 1 und 2.

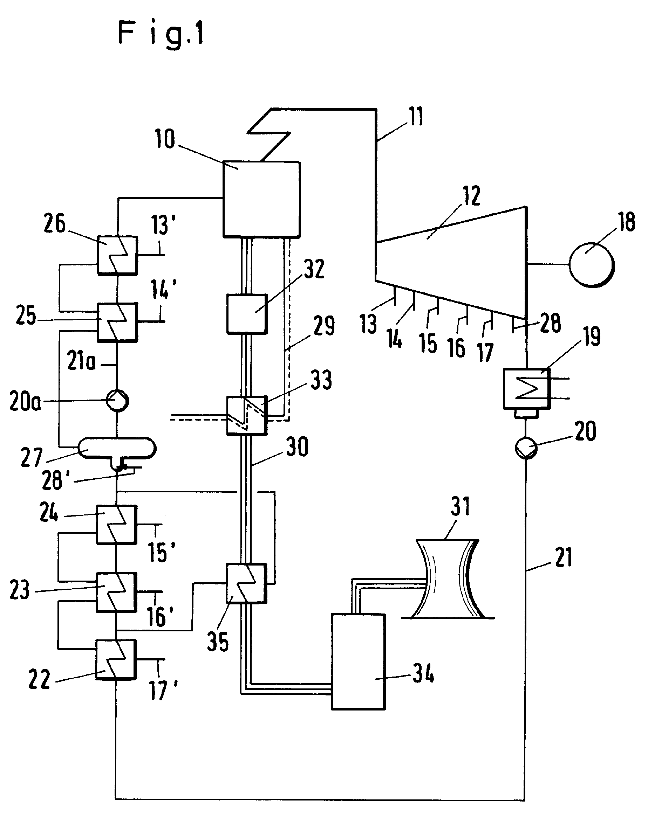

Die in der Figur 1 dargestellte Kraftwerksanlage besitzt einen Dampferzeuger 10, aus dem Dampf mit bestimmter Temperatur und bestimmtem Druck über eine Zuleitung 11 einer Dampfturbinenanlage 12 zugeführt wird, die an unterschiedlichen Stellen Anzapfungen 13 bis 17 aufweist. Die Dampfturbinenanlage 12 ist mit einem Generator 18 gekoppelt, der zur Stromerzeugung in an sich bekannter Weise dient. An der Turbinenaustrittseite wird der in der Turbinenanlage entspannte Dampf einem Kondensator 19 zugeführt und darin kondensiert. Das aus dem Kondensator 19 austretende Wasser wird mittels einer Kondensatspeisepumpe 20 über eine Zuführungsleitung 21 einem Speisewasserbehälter 27 zugeführt. Das aus dem Speisewasserbehälter 27 austretende Wasser wird mittels einer Kesselspeisepumpe 20a über eine Zuführungsleitung 21a dem Dampferzeuger 10 zugeleitet.

Innerhalb der Zuführungsleitung 21 und 21a befinden sich Wärmetauscher 22, 23, 24, 25 und 26, in denen das Speisewasser mittels von den Anzapfungen 13 bis 17 herkommenden Dampf, Anschlüsse 13' bis 17', auf eine Temperatur erwärmt wird, die etwa bei 220 °C liegt; dieses 220 °C heiße Wasser wird dem Dampferzeuger 10 zugeführt. Zwischen den beiden Wärmetau- schern 24 und 25 befindet sich ein Speisewasserbehälter 27, in dem das Wasser entgast und mit Dampf (und damit Wasser) von der Turbinenanlage 12 vermischt wird; dieser von einer Anzapfung 28 nahe am Turbinenaustritt Dampf wird über eine Zuführungsleitung 28, dem Speisewasserbehälter 27 zugeführt.

Dem Dampferzeuger 10 wird über eine Luftzufuhrleitung 29 Frischluft zugeführt, mit der innerhalb des Dampferzeugers Brennstoff, vorzugsweise Kohle, verbrannt wird. Die dabei entstehenden Rauchgase erwärmen das dem Dampferzeuger 10 zugeführte Wasser und gelangen über eine Rauchgasleitung 30 zu einem Naturzug-Kühlturm 31, in dem sie an die Atmosphäre abgegeben werden.

Hinter dem Dampferzeuger 10 befindet sich in der Rauchgasleitung 30 eine Entstickungsanlage 32, danach ein Luftvorwärmer 33 und dahinter eine Rauchgasentschwefelungsanlage 34.

Die Austrittstemperatur des Rauchgases beim Austritt aus dem Dampferzeuger 10 beträgt ca. 350 °C, und in der Entstickungsanlage 32 wird die Temperatur praktisch kaum herabgesetzt. Im Luftvorwärmer 33 wird dem Rauchgas eine solche Menge Wärme zur Vorwärmung der Luft für den Dampferzeuger entnommen, daß die Temperatur des Rauchgases hinter dem Luftvorwärmer ca. 140 °C beträgt. Die Temperatur des der Rauchgasentschwefelungsanlage 34 zuzuführenden Rauchgases soll zwischen 50 bis 90 °C, vorzugsweise bei 75 °C liegen, und um diese Temperatur zu erreichen, wird zwischen dem Luftvorwärmer 33 und der Rauchgasentschwefelungsanlage 34 ein Wärmetauscher 35 eingefügt, dem zwischen den beiden Wärmetauschern 22 und 23 mit einer Temperatur von ca. 60 °C entnommenes Wasser auf eine Temperatur erhöht wird, die abhängig ist von der der Rauch- gasentschwefelungsanlge 34 zuzuführenden Temperatur. Diese in dem Wärmetauscher 35 entnommene Wärmemenge ist bei Kraftwerksanlagen mit einem Kamin der Eintrittsseite des Kamins zugeführt worden und damit nicht genutzt worden. Erfindungsgemäß kann bei der Benutzung der Ableitung über den Kühlturm diese Wärmemenge dem Dampferzeugungsprozeß wieder zugeführt, wodurch der Wirkungsgrad erhöht werden kann.

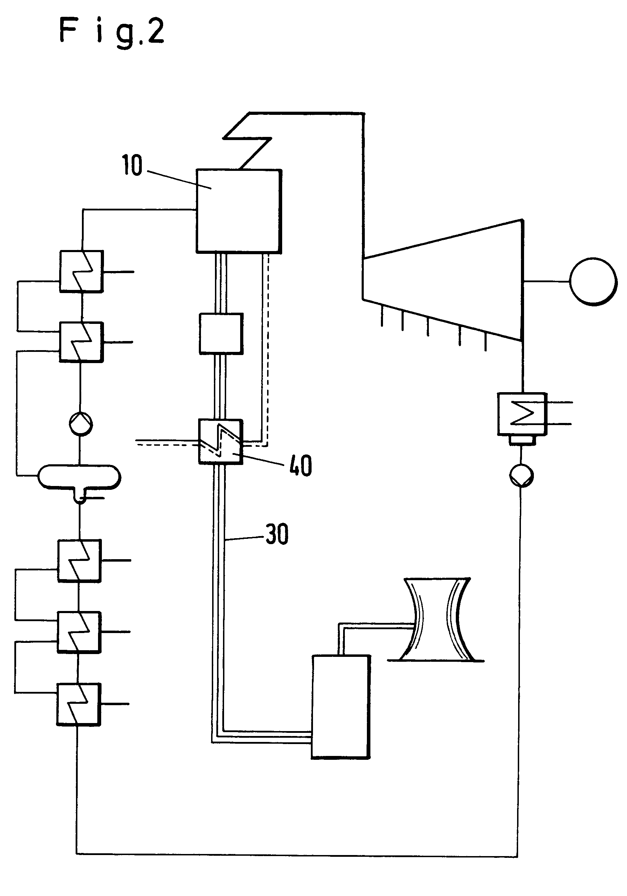

Die Kraftwerksanlage nach Figur 2 unterscheidet sich von derjenigen nach Figur 1 lediglich darin, daß der Wärmetauscher 35 fehlt. Zur Abführung der Wärme innerhalb der Rauchgasleitung 30 wird hier der Luftvorwärmer 40 vergrößert ausgebildet, so daß die Luft, die dem Dampferzeuger 10 zuzuführen ist, auf eine höhere Dampferzeugereintrittstemperatur gebracht wird. Damit reduziert der Luftvorwärmer 40 die Rauchgastemperatur von 350 °C auf ca. 50 bis 90 °C, vorzugsweise 75 °C.

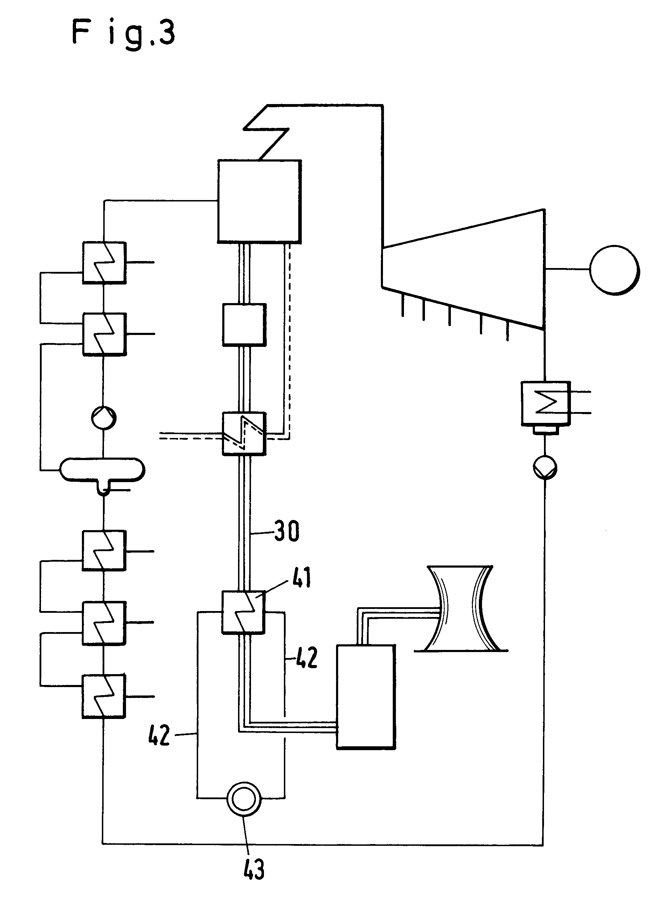

Bei der Ausführung nach Figur 3 befindet sich in der Rauchgasleitung 30 ein Wärmetauscher 41, der seine Wärme über eine Vor- und Rücklaufleitung 42 einem Fernwärmenetz 43 zuführt.

## Patentansprüche

1. Kraftwerksanlage mit einer Dampfturbinenanlage (12), der in einem Dampferzeuger (10) durch Verbrennen von fossilem Brennstoff, vorzugsweise von Kohle, erzeugter Dampf zugeführt wird, mit einer vom Dampferzeuger (10) zu einer Ableitung in einem Kühlturm (31) verlaufenden Rauchgasleitung (30), mit einem in der Rauchgasleitung (30) hinter dem Dampferzeuger (10) befindlichen Luftvorwärmer (33), in dem die dem Dampferzeuger (10) zugeführte Frischluft vorgewärmt wird, mit einer zwischen dem Luftvorwämer (33) und der Ableitung befindlichen Rauchgasentschwefelungsanlage (34) und mit einer Speisewasserleitung (21) zur Rückführung des aus dem Kondensator (19) der Dampfturbinenanlage austretenden Wassers in den Dampferzeuger (10), dadurch gekennzeichnet, daß zwischen dem Luftvorwärmer (33) und der Rauchgasentschwefelungsanlage (34) eine Wärmetauschereinrichtung (35) vorgesehen ist, die dem Rauchgas Wärme entnimmt und damit der Speisewasserleitung (21) entnommenes Speisewasser erwärmt, das der Speisewasserleitung (21) wieder zugeführt wird.

2. Kraftwerksanlage nach Anspruch 1, dadurch gekennzeichnet, daß die Entnahme des Speisewassers zwischen zwei Wärmetauschern (22 und 23) zur Vorwärmung des Speisewassers erfolgt und das in der Wrmetauschereinrichtung (35) erwärmte Speisewasser der Speisewasserleitung vor einem Speisewasserbehälter (27) zuführbar ist.

3. Kraftwerksanlage mit einer Dampfturbinenanlage (12), der in einem Dampferzeuger (10) durch Verbrennen von fossilem Brennstoff, vorzugsweise von Kohle, erzeugter Dampf zugeführt wird, mit einer vom Dampferzeuger (10) zu einer Ableitung in einem Kühlturm (31) verlaufenden Rauchgasleitung (30), mit einem in der Rauchgasleitung hinter dem Dampferzeuger befindlichen Luftvorwärmer (33), in dem die dem Dampferzeuger (10) zugeführte Frischluft vorgewärmt wird, mit einer zwischen dem Luftvorwärmer (33) und der Ableitung befindlichen Rauchgasentschwefelungsanlage (34) und mit einer Speisewasserleitung (21) zur Rückführung des aus dem Kondensator (19) der Dampfturbinenanlage austretenden Wassers in den Dampferzeuger (10), dadurch gekennzeichnet, daß zwischen dem Luftvorwärmer (33) und der Rauchgasentschwefelungsanlage (34) eine Wärmetauschereinrichtung (41) vorgesehen ist, die dem Rauchgas Wärme entnimmt und damit ein Fernwärme übertragendes Fluid erwärmt, wobei die Wärmetauschereinrichtung (41) Teil eines Fernwärmenetzes (42, 43) ist.

## Claims

1. Power station installation with a steam turbine plant (12), which is supplied with steam generated in a steam generator (10) by burning of fossil fuel, preferably of coal, with a flue gas line (30) running from the steam generator (10) to a removal line in a cooling tower (31), with an air heater (33) located in the flue gas line (30) downstream of the steam generator (10), in which air heater the fresh air supplied to the steam generator (10) is heated, with a flue gas desulphurisation plant (34) between the air heater (33) and the removal line and with a feed water line (21) for returning the water leaving the condenser (19) of the steam turbine plant to the steam generator (10), characterised in that there is provided between the air heater (33) and the flue gas desulphurisation plant (34) a heat exchanger device (35) which extracts heat from the flue gas and uses it to heat feed water extracted from the feed water line (21), which feed water is returned to the feed water line (21).

2. Power station installation according to Claim 1, characterised in that the extraction of the feed water takes place between two heat exchangers (22 and 23) for heating the feed water and the feed water heated in the heat exchanger device (35) can be passed to the feed water line upstream of a feed water tank (27).

3. Power station installation with a steam turbine plant (12), which is supplied with steam generated in a steam generator (10) by burning of fossil fuel, preferably of coal, with a flue gas line (30) running from the steam generator (10) to a removal line in a cooling tower (31), with an air heater (33) located in the flue gas line downstream of the steam generator, in which air heater the fresh air supplied to the steam generator (10) is heated, with a flue gas desulphurisation plant (34) between the air heater (33) and the removal line and with a feed water line (21) for returning the water leaving the condenser (19) of the steam turbine plant to the steam generator (10), characterised in that there is provided between the air heater (33) and the flue gas desulphurisation plant (34) a heat exchanger device (41) which extracts heat from the flue gas and uses it to heat a fluid transmitting district heat, the heat exchanger device (41) being part of a district heating network (42, 43).

## Revendications

1. Installation de production d'électricité comportant un ensemble turbine à vapeur (12) qui est alimenté par de la vapeur produite dans un générateur de vapeur (10) par combustion de combustible fossile, notamment de houille, une conduite de gaz de fumée (30) qui mène du générateur de vapeur (10) à une sortie dans une tour de refroidissement (31), un réchauffeur d'air (33) qui est monté dans la conduite de gaz de fumée (30) en aval du générateur de vapeur (10) et dans lequel l'air frais alimentant le générateur de vapeur (10) est réchauffé, une installation (34) de désulfuration du gaz de fumée placée entre le réchauffeur d'air (33) et la sortie, ainsi qu'une conduite d'eau d'alimentation (21) qui ramène dans le générateur de vapeur (10) l'eau sortant du condenseur (19) de l'ensemble turbine à vapeur, caractérisé par le fait qu'il est prévu entre le réchauffeur d'air (33) et l'installation de désulfuration (34) un dispositif échangeur de chaleur (35) qui prélève de la chaleur sur le gaz de fumée et réchauffe de l'eau qui est prélevée sur la conduite d'eau d'alimentation (21) puis renvoyée dans la conduite d'eau d'alimentation (21).

2. Installation de production d'électricité selon la revendication 1, caractérisée par le fait que l'eau d'alimentation est prélevée entre deux échangeurs de chaleur (22 et 23) servant au réchauffage de l'eau d'alimentation et que l'eau d'alimentation réchauffée dans le dispositif échangeur de chaleur (35) est renvoyée dans la conduite d'eau d'alimentation en amont d'un réservoir (27) d'eau d'alimentation.

3. Installation de production d'électricité comportant un ensemble turbine à vapeur (12) qui est alimenté par de la vapeur produite dans un générateur de vapeur (10) par combustion de combustible fossile, notamment de houille, une conduite de gaz de fumée (30) qui mène du générateur de vapeur (10) à une sortie dans une tour de refroidissement (31), un réchauffeur d'air (33) qui est monté dans la conduite de gaz de fumée (30), en aval du générateur de vapeur (10), et dans lequel l'air frais alimentant le générateur de vapeur (10) est réchauffé, une installation (34) de désulfuration du gaz de fumée placée entre le réchauffeur d'air (33) et la sortie ainsi qu'une conduite d'eau d'alimentation (21) qui ramène dans le générateur de vapeur (10) l'eau sortant du condenseur (19) de l'ensemble turbine à vapeur, caractérisée par le fait qu'il est prévu entre le réchauffeur d'air (33) et l'installation de désulfuration (34) un dispositif échangeur de chaleur (41) qui prélève de la chaleur sur le gaz de fumée et réchauffe un fluide caloporteur de chauffage urbain, le dispositif échangeur de chaleur (41) faisant partie d'un réseau de chauffage urbain (42, 43).
